# EUROPÄISCHE PATENTSCHRIFT

(11) **EP 0 912 843 B1**
(45) Veröffentlichungstag und Bekanntmachung des Hinweises auf die Patenterteilung: **29.03.2000**
(21) Anmeldenummer: 97937486.5
(22) Anmeldetag: 15.07.1997
(51) Int. Cl.: F16H 49/00

(54) **KOPPELGETRIEBE**
COUPLED GEAR
MECANISME ARTICULE

(30) Priorität: 20.07.1996 DE 19629358
(43) Veröffentlichungstag der Anmeldung: 06.05.1999
(73) Patentinhaber: Hofmann, Detlef, 75249 Kieselbronn (DE)
(72) Erfinder: Hofmann, Detlef, 75249 Kieselbronn (DE)
(74) Vertreter: Reinhardt, Harry
(86) Internationale Anmeldenummer: EP9703779
(87) Internationale Veröffentlichungsnummer: WO9803807

(56) Entgegenhaltungen:
- WO-A-84/01418
- US-A- 5 042 322
- PATENT ABSTRACTS OF JAPAN vol. 008, no. 270 (M-344), 11.Dezember 1984 & JP 59 140937 A (SHIMAZU SEISAKUSHO KK), 13.August 1984,

## Beschreibung

Die Erfindung betrifft eine Vorrichtung zum Verschieben und/oder Verdrehen wenigstens eines Bauteils relativ zu einem zweiten Bauteil mittels eines Koppelgetriebes nach dem Oberbegriff des Anspruches 1.

Eine derartige Vorrichtung ist aus der EP 0 422 263 A1 bekannt und wird z.B. als Teilapparat eingesetzt, bei dem das koppelnde Getriebe die Herstellung von Kreis- bzw. Winkelteilungen um einen bestimmten einstellbaren Betrag erlauben muß. Hierbei werden sehr hohe Anforderungen an die Wiederholbarkeit der Teile sowie die über den Teilapparat zu übertragenden Kräfte gestellt. Gleichzeitig kann eine derartige Vorrichtung aber auch in Arbeitszentren oder in Verbindung mit Robotern eingesetzt werden. Bei der bekannten Vorrichtung werden hierzu zwischen zwei Zahnkränzen mit unterschiedlicher Zähnezahl Rollkörper eingesetzt, die in Anlage mit den gegenüber stehenden Zahnflanken stehen. Über ein Druckelement oder eine Kurvenscheibe werden die Kugeln dann mehr oder weniger tief in die Zahnkränze eingesteuert, so daß sich die gewünschte Untersetzung ergibt. Damit erzielt die bekannte Vorrichtung eine äußerst präzise Einstellung und Untersetzung, allerdings nur in einer Wirkrichtung.

Ausgehend von diesem Stand der Technik liegt der vorliegenden Erfindung daher die Aufgabe zugrunde, eine Vorrichtung der eingangs genannten Gattung derart weiterzubilden, daß auch größere Kräfte zuverlässig flächig übertragen werden können.

Diese Aufgabe wird durch eine Vorrichtung mit den Merkmalen des Anspruches 1 gelöst.

Um höhere Kräfte zu übertragen, sind die Eingriffsmöglichkeiten bzw. Paarungsmöglichkeiten zwischen Rollkörper und kegelförmigen Bohrungen zumindest in dem einen Teil des Getriebes nicht mehr ein Zahnkranz, sondern eine Vielzahl von kegel- oder kegelstumpfförmigen Löchern. Die Rollkörper kommen damit auf einer größeren Fläche in Anlage, so daß sie flächig Kräfte in zwei Richtungen übertragen können wie z.B. drehend und gleichzeitig axial. Somit erfolgt eine lagegenaue Positionsbestimmung in einer beliebig geformten Fläche, die durch ein kartesisches Koordinatensystem, ein Zylinderkoordinaten-System, ein Polkoordinaten-System oder ein beliebiges anderes Koordinatensytem aufgespannt sein kann.

Um bei der eintretenden Übersetzung auch größere Wege zurücklegen zu können und dennoch auf die Lagebestimmung nicht verzichten zu müssen, grenzt an die kegel- oder kegelstumpfförmigen Bohrungen gemäß Anspruch 2 ein Bereich mit Nuten an, in denen die Einrichtung nur hinsichtlich eines Freiheitsgrades bestimmt ist, so daß eine Verschiebung problemlos möglich ist.

Da die Vorrichtung in Arbeitszentren z.B. auch in Zusammenhang mit einem Spannfutter eingesetzt werden kann, kann sie so ausgebildet werden, daß der Winkel des Druckelements oder der Kurvenscheibe kleiner ist als der Selbsthemmungswinkel gemäß Anspruch 4. Dadurch ist es z.B. möglich, das Koppelgetriebe manuell oder mit einer Antriebseinrichtung zu koppeln, ohne daß sich die gekoppelte Verbindung von selbst wieder löst. Dies ermöglicht z.B. das Ausstoßen einer Druck-, Zug-, Spreiz- oder Spannzange, ohne daß eine Feder erforderlich ist.

Will man eine weitere Untersetzung erzielen, so können z.B. zwei Getriebe gemäß Anspruch 6 so ineinander greifen, daß eine doppelte Untersetzung erfolgt.

Bei einer Ausgestaltung nach den Ansprüchen 8 bis 10 läßt sich ein äußerst kompakter Aufbau erzielen, wie er insbesondere beim Einsatz der Vorrichtung beim Drehen und Schwenken in Arbeitszentren oder bei Arbeitsrobotern erforderlich ist.

### Kurze Beschreibung der Zeichnungen

- Fig. 1: Ein Schnitt durch eine zylindrische Vorrrichtung, die zwei Bauteile verschiebbar koppelt,
- Fig. 2,2a,2b: eine dreidimensionale Ansicht einer flächig und doppelt übereinander wirkenden Vorrichtung,
- Fig. 3: ein vergrößerter Schnitt im Bereich eines Übertragungselements bei einer mehrfach hintereinander wirkenden Vorrichtung.
- Fig. 4: ein zylinderförmiges Druckelement,
- Fig. 5: ein flächiges Druckelement.

Die Vorrichtung dient zum Verschieben und oder Verdrehen wenigstens eines Bauteils 10 relativ zu einem zweiten Bauteil 11 mittels eines Koppelgetriebes 12. Eine derartige Vorrichtung kann z.B. eingesetzt werden, um Dreh- und Schwenkbewegungen in Arbeitszentren oder an Robotern zu ermöglichen, in denen bekannte Steuerungen zu groß und zu aufwendig wären. Aufgrund der hohen Untersetzungsleistung kann die Vorrichtung aber auch in Verbindung mit einem Spannfutter oder als Kraftverstärker für zwei Bewegungsrichtungen eingesetzt werden. Dennoch läßt sich die Vorrichtung auch infolge der flächigen Abstützung sehr kompakt ausbilden, was insbesondere bei Dreh- und Schwenkbewegungen von Vorteil ist.

Als Einsatzbereiche kommen z.B. Linearübersetzungen in Betracht, die zugleich eine Anschraub- und/oder Drehbewegung durchführen sollen. Ebenso kann die Vorrichtung zur Zangenspannung in Verbindung mit Luftzylindern für eine Schnellverstellung durch Ausrasstung oder Freischaltung, für eine stufenlose Schieberlinearfeineinstellung an Maschinenschraubstöcken, für sonstige Spannelemente wie Schnellverstellzwingen, aber auch für Richtpressen, Hubgeräte und Noniusmeßeinrichtungen sowie Winkeleinstellungen eingesetzt werden. Die Vorrichtung eignet sich auch in Verbindung mit Bremskraft, Hand-, Hebel oder Luftkraftverstärkern oder kann Teil eines Lenkgetriebes sein, ganz zu schweigen von kombinierten Linear- und Kreisteilgetrieben. Auch ein Einsatz bei Feinjustierungen z.B. von Kameras oder Fernrohren ist möglich, so z.B. wenn das Gerät auf einer gekrümmien Fläche bewegt wird und justiert werden muß, wobei zumindest auf einen Teil der hierfür bisher erforderlichen Rändelmuttern verzichtet werden kann.

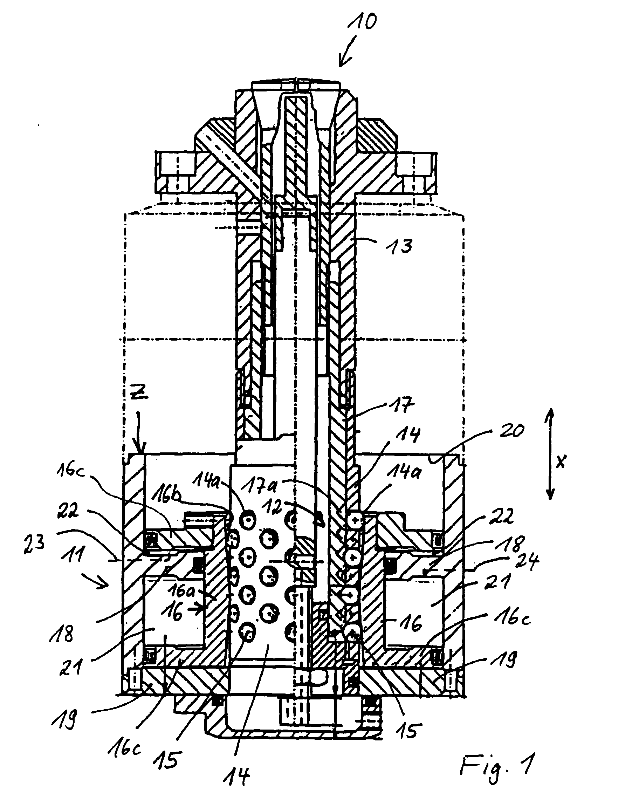

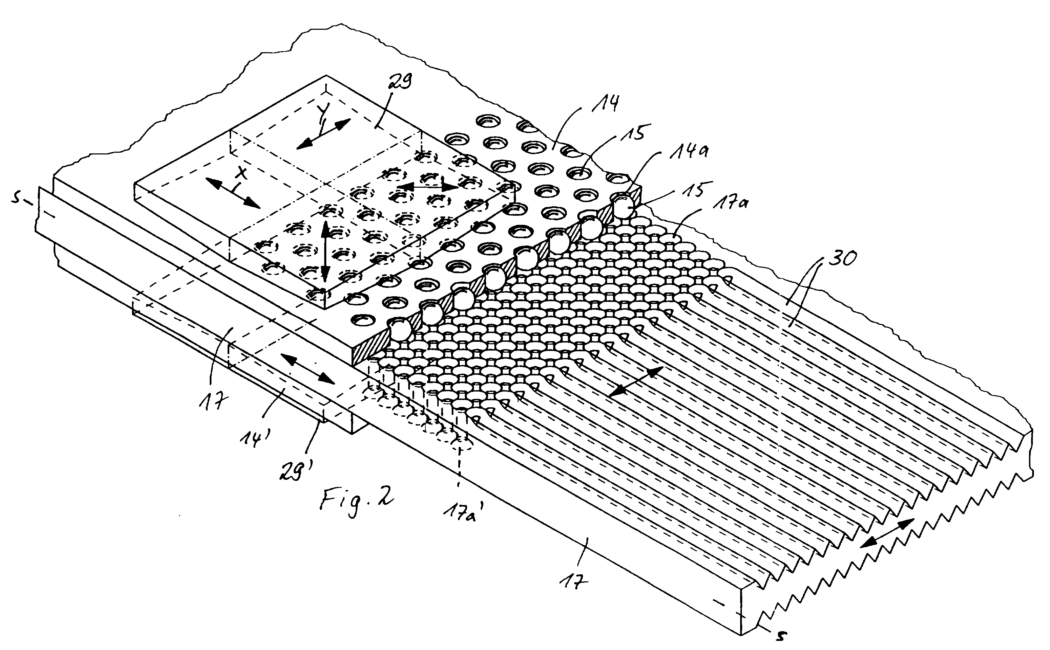

So vielfältig wie die Einsatzgebiete sind auch die Möglichkeiten für die Einleitung der Primärkraft. Fig. 1 zeigt eine hydraulische oder pneumatische Betätigung, die Primärkraft kann aber ebenso von der Schwerkraft, der Fliehkraft, der Beschleunigung oder Verzögerung beim progressiven Bremsen als auch von einer Klemmung, einer Magnetkraft oder einer Federkraft abgeleitet sein. Die Kraft zur Betätigung kann von einem Schlag oder Aufprall, einer Strömung oder Reibung herrühren und mechanisch, manuell oder motorisch erzeugt sein.

Fig. 1 zeigt eine zylinderförmige Vorrichtung, die vorzugsweise ein gegenüber den Bauteilen 10,11 stationäres Führungselement 13 aufweist. Am Führungselement 13 ist ein Rollkörperkäfig 14 angeordnet, in dem in Verschiebe- oder Verdrehrichtung x in Reihe angeordnete Rollkörper 15 wie z.B. Kugeln in Aufnahmen 14a des Rollkörperkäfigs 14 quer zum Führungselement 13 bzw. zur Verschieberichtung x oder y beweglich sind. Die Kugeln können unmittelbar aneinandergereiht sein, in Fig. 1 jedoch wurden die Aufnahmen zwar reihenweise angeordnet, aber parallel zueinander versetzt, so daß die Werkstoffeigenschaften zwischen den Aufnahmen besser ausgenutzt werden, um z.B. hohe Kräfte zu übertragen.

Die in Fig. 1 dargestellte Vorrichtung erlaubt ein Verschieben der Bauteile zueinander, wozu die Bauteile zylinderförmig angeordnet sind. Eine derartige Ausführungsform kann z.B. in Verbindung mit einem Spannfutter eingesetzt werden. Ein Druckelement 16a ist einem der beiden Bauteile 10,11 zugeordnet, im Ausführungsbeispiel dem außen liegenden Bauteil 11. Das Druckelement 16a weist wenigstens eine keilförmig, linear an- und absteigende Rollbahn 16b auf, die an den Rollkörpern 15 anliegt und diese mehr oder weniger tief in die prismenförmigen Aufnahmen 14a des Rollkörperkäfigs 14 drückt. Das andere Bauteil 10 ist in diesem Fall innen liegend und kann z.B. eine Spannzange sein. Es steht dort mit einem Übertragungselement 17 in Verbindung, das an seiner dem Rollkörperkäfig 14 zugewandten Seite mehrere in Reihe angeordnete Eingriffsmöglichkeiten aufweist. Auch diese Eingriffsmöglichkeiten können unmittelbar in Reihe oder in gleichmäßigem Abstand zueinander angeordnet sein. In diese Eingriffsmöglichkeiten tauchen die vom Druckelement 16a betätigten Rollkörper 15 so ein, daß sie zumindest die Flanken 17b der Eingriffsmöglichkeiten berühren. Um hier nun eine entsprechende Kopplung und Untersetzung zu erhalten, steht der Abstand der Eingriffsmöglichkeiten zueinander zumindest in einem geringfügig anderen Teilerverhältnis als der Abstand der Aufnahmen 14a des Rollkörperkäfigs 14. In zeichnerisch nicht dargestellter Weise können die Ränder der Aufnahmen 14a des Rollkörperkäfigs aufgebördelt sein, um ein Herausfallen der Rollkörper zu vermeiden.

Wird das hier zylinderförmige, innen beidseitig konische Druckelement 16a in der Zeichnung nach oben bewegt, so werden die oben befindlichen Rollkörper 15 tiefer in das Übertragungselement gedrückt, so daß das Übertragungselement sich in der Zeichnung nach unten bewegt. Wird das Druckelement in die gestrichelte Position bis an den Anschlag 20 nach oben bewegt, so wird das Übertragungselement 17 bei entsprechendem Abstand der Eingriffsmöglichkeiten z.B. im Verhältnis 1 : 10 nach unten bewegt, sofern die Teilung größer ist als die der Rollkörper. Umgekehrt ergibt sich eine synchrone Bewegung, wenn der Abstand der Rollkörper größer ist als der Abstand der Bohrungen 17a. Das Verhältnis des Abstands der Bohrungen zum Abstand der Rollkörper 15 bestimmt das Übersetzungsverhältnis.

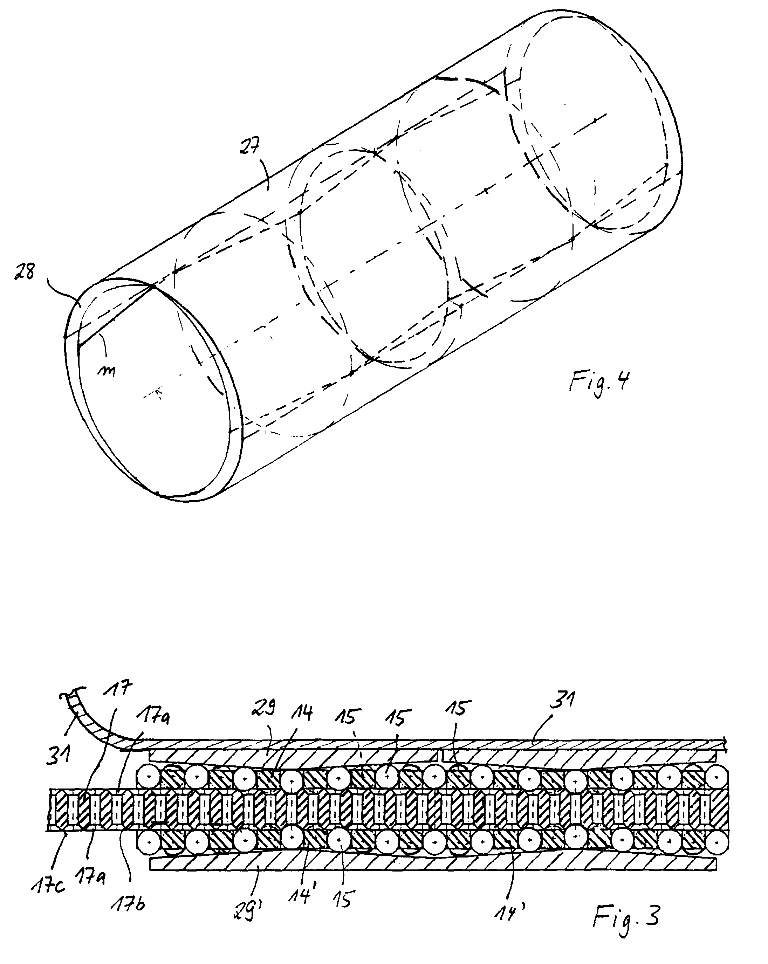

Fig. 1 und 3 machen deutlich, daß die Rollkörper 15 sowohl mit dem Druckelement 16a, 29, 29' als auch mit den Flanken 17b des Übertragungselements 17 in Berührung sind. Somit sind üblicherweise mehr als 40% der Rollkörper in Wirkverbindung mit dem Übertragungselement, so daß die gewünschte Kraftübertragung möglich ist.

Die Eingriffsmöglichkeiten sind kegel- oder kegelstumpfförmige Bohrungen 17a. Dies gewährleistet die entsprechende Anlage an Übertragungselement 17 und Druckelement 16a und damit eine hinsichtlich zweier Freiheitsgrade bestimmte Abstützung. An den Flanken 17b der Bohrungen stützen die Rollkörper das eine Bauteil damit in einer Fläche, die zu der Fläche parallel ist, in der die Bohrungen 17a liegen. Damit ergibt sich ein flächiges Getriebe, bei dem eine Lagebestimmung in zwei Koordinatenrichtungen möglich ist. Denkbar sind kartesiche Koordinaten, Zylinderkoordinaten, Polkoordinaten, aber auch andere Koordinatensysteme. So können die beiden Richtungen eine beliebige Fläche bilden wie z.B. die Oberfläche einer längsgestreckten Schnecke, einer Kugel oder eine Ebene. Wesentlich ist nur, daß zumindest ein Teil der Rollkörper in Kontakt mit einer Kegeloberfläche steht. Insofern können die Aufnahmen auch Prismen sein, in die eine prismenförmiges Druckelement von anderer Seite eingreift, um die Rollkörper mehr oder weniger tief in die Bohrungen zu drücken, sofern die Rollkörper dabei noch in kegelförmige Bohrungen eintauchen.

Nicht sämtliche Eingriffsmöglichkeiten müssen kegel- oder kegelstumpfförmige Bohrungen sein. Es ist durchaus möglich einen Teil der Eingriffsmöglichkeiten als Nuten oder Ringnuten auszubilden. Dies hat den Vorteil, daß sich die Nuten preisgünstiger und präziser herstellen lassen als die Bohrungen, so daß eine Abwägung zwischen Präzision und Lagegenauigkeit stattfinden muß.

Zwar zeigen die Fign. 1-3 eine Vorrichtung, die zum Verschieben mittels eines Koppelgetriebes bestimmt ist, jedoch läßt sich dieses Prinzip auch leicht für eine Drehbewegung einsetzen, wobei sich dann zunächst eine Ausgestaltung ergibt, wie sie z.B. in der Fig. 1 der gattungsbildenden EP 0 422 263 A1 dargestellt ist. Die Kugeln laufen dabei auf einer Kreislinie um und werden über eine Kurvenscheibe in die Aufnahme 14a eines Rollkörperkäfigs eingesteuert. Das Übertragungselement besitzt dann ebenfalls die entsprechenden kegel- oder kegelstumpfförmigen Bohrungen 17a. Eine derartige Kurvenscheibe hätte z.B. eine Form wie die Kreislinie 28 in Fig. 4 bei einer außen liegenden Kurvenscheibe mit zwei An- und Abstiegen. Es versteht sich von selbst, daß die Kurvenscheibe auch innen liegen kann, um das Prinzip umzukehren, und daß sie auch mehr als zwei An- und Abstiege aufweisen können. Ebenso kann auch in Fig. 1 das Druckelement innen liegend sein und das Übertragungselement außen.

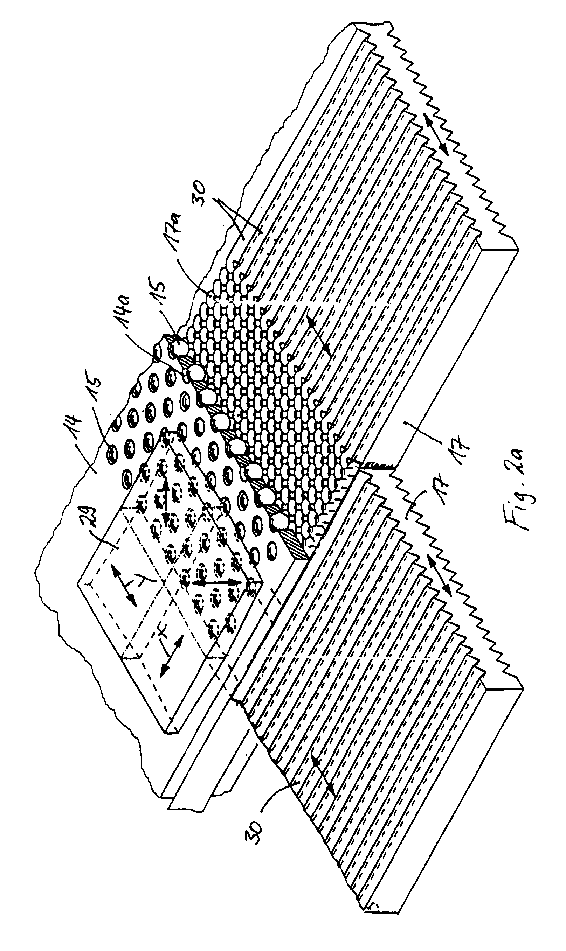

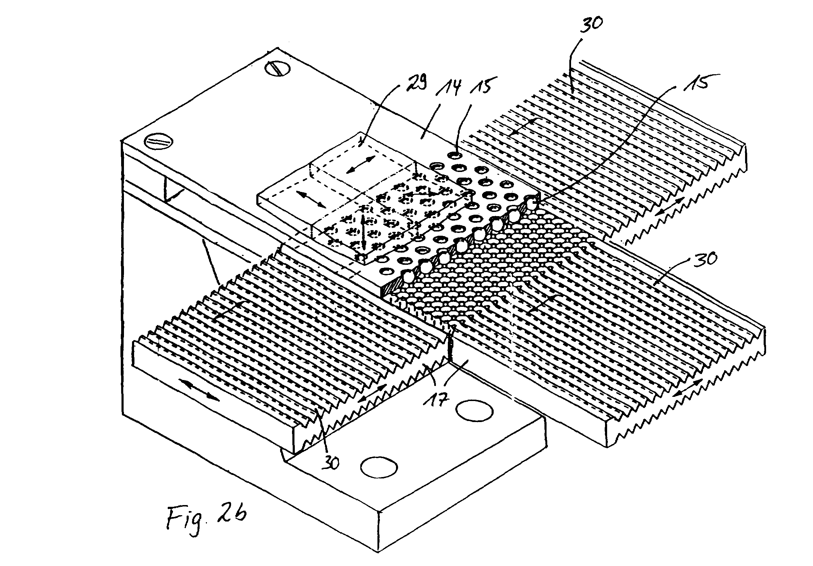

Die flächige Abstützung in Verbindung mit der Übertragungsrate begrenzt den Bewegungsspielraum. Dies läßt sich jedoch gemäß Fig. 2, 2a, 2b dadurch bereinigen, daß neben dem Bereich mit den kegel- oder kegelstumpfförmigen Bohrungen 17a ein Bereich mit Nuten 30 vorgesehen ist, die sich in Richtung der in Reihe angeordneten Bohrungen erstrecken und in die die Rollkörper zur Axialverschiebung überführbar sind. Die Nuten können sich jedoch auch quer zu dieser Richtung erstrecken (Fig 2a, 2b). Dort ist jetzt eine Bewegung entlang des Überführungselements möglich, in einer Richtung entlang der Nuten geführt, in der anderen Richtung ungeführt oder mittels eines Anschlags oder eines Lineals geführt, so daß sich das Druckelement 29 versetzen läßt und an einer neuen Stelle wieder mit den Bohrungen 17a in Verbindung gebracht wird, ohne den Kontakt mit den Kugeln zu verlieren. Wie Fig. 2b verdeutlicht ist es gleichgültig, welches Teil der Vorrichtung stationär ist.

Die Rollkörper berühren die Flanken 17b der Eingriffsmöglichkeiten spielfrei. Die Rollbahn 16b des Druckelements 16a weist vorzugsweise gegenüber der Verschiebe- oder Verdrehrichtung x,y einen Winkel auf, der kleiner ist als der Selbsthemmungswinkel des Werkstoffs von Rollkörper 15 und Druckelement 16a. Dadurch kann z.B. in Fig. 1 das Druckelement über den Betätigungszylinder Z verstellt werden, befindet es sich dann jedoch in der gewünschten Stellung, kann der Zylinder drucklos geschaltet werden, was wesentlich sein kann, wenn die gesamte Vorrichtung z.B. an einem Roboter rotieren soll. Selbst unter diesen Bedingungen löst sich die Vorrichtung aufgrund der Selbsthemmung nicht mehr aus der gewünschten Position. Beim Einsatz in Verbindung mit einer Spannzange oder einem anderen Werkzeug kann die Spannzange selbst ohne Feder wieder ausgestoßen werden. Als weitere Sicherung kann die Vorrichtung in dieser Stellung über einen zweiten außen angreifenden Kegel in bekannter Weise zusätzlich verspannt werden, was aufgrund der glättenden Wirkung der Rollkörper für die Langlebigkeit der Vorrichtung unschädlich ist. Gleichzeitig können auch die Kräfte bei diesem Koppelgetriebe sehr stark untersetzt werden. Dadurch können selbst hohe Umdrehungen in langsame Bewegungen übersetzt werden, die zu dem hohen Stillstands- bzw. Haltemoment führen.

Das Getriebe ist durch die diagonale Anpressung der Rollkörper 15 selbst nachstellend und verschleißfrei, zumal die Rollkörper 15 eventuelle Beschädigungen glätten. Die Rollkörper 15 sind zwischen Bohrung 17a, Druckelement 16,29 und Aufnahme 14a festgelegt und damit in ihrer Lage bestimmt.

Die gewünschte Untersetzung kann noch weiter gesteigert werden, indem am Übertragungselement 17 auf der den Eingriffsmöglichkeiten im rechten Winkel zur Verdrehung oder Verschieberichtung x gegenüberliegenden Seite 17c weitere Eingriffsmöglichkeiten für ein zweites Koppelgetriebe vorgesehen werden, wie dies z.B. in Fig 2 dargestellt ist. Hierzu werden Druckelement 29 und Rollkörperkäfig 14 an der Linie s-s gespiegelt. In Fig. 2 unten finden sich insofern ein weiteres Druckelement 29' und ein weitere Rollkörperkäfig 14' für Rollkörper 15. Alternativ können das obere und untere Druckelement 29,29' zur Synchronbewegung gekoppelt sein, wodurch höhere Kräfte übertragbar werden und eine Führung für das Druckelement einzusparen ist. Wie aus Fig. 2 ersichtlich bilden die Rollkörper 15 hier die Eckpunkte eines Vierecks.Die Rollkörper können aber auch die Eckpunkte eines Dreiecks, vorzugsweise eines gleichschenkligen Dreiecks bilden, was insbesondere bei globoidalen Einsätzen der Vorrichtung von Vorteil ist.

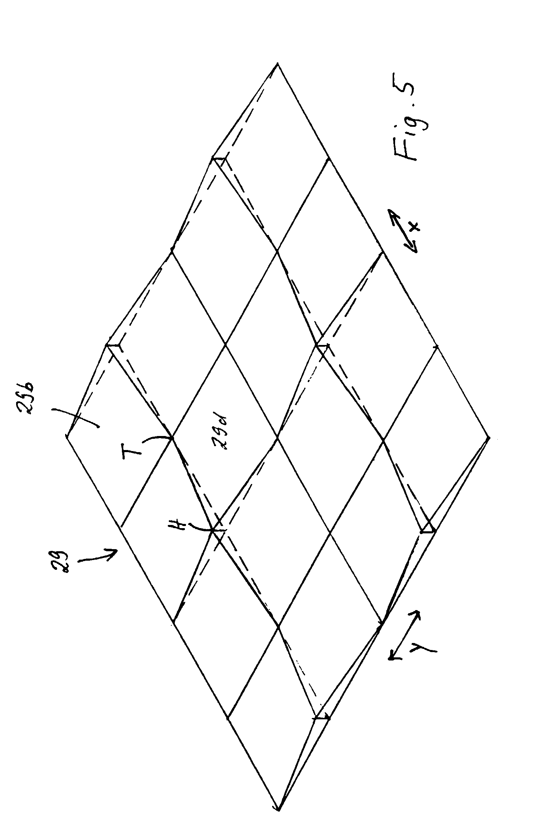

Eine weitere vorteilhafte Möglichkeit in Verbindung mit dem Getriebe besteht darin, mehrere der in Fig. 1 dargestellten Vorrichtungen in Verschiebe- oder Verdrehrichtung gemäß Fig. 3 in Reihe hintereinander anzuordnen, wobei gleichzeitig eines der Bauteile 10, 11 über die Rollkörper 15 gelagert werden kann. Fig. 3 zeigt auch eine automatische Betätigung. Werden mehrere Druckelemente 29 an einem auf Umlenkrollen umlaufenden Transportband 31 zusammengefügt, ist ein endloser Eingriff und damit Vorschub möglich. Die Fig. 4 und 5. zeigen den Aufbau des Druckelements 29. Das in Fig. 5 dargestellte Druckelement ist eben und entspricht insofern einer Abwicklung des zylinderförmigen Betätigungselements 27 der Fig. 4. In Fig. 4 laufen die Mantellinien abwechselnd radial nach außen und innen, was bei Verschiebung die Auf- und Abbewegung der Rollkörper 15 in den Aufnahmen 14a bewirkt. Das Betätigungselement ist dabei geschlossen und schützt das Getriebe vor Schmutz. In der ebenen Darstellung der Fig. 5 besitzt das Druckelement 29 Hochpunkte H und Tiefpunkte T, zwischen denen sich die Fläche in zwei Richtungen senkt und hebt. Um allgemein das Einsetzen des Druckelements auf den Rollkörpern richtungsunabhängig zu machen, kann das Druckelement auch eine kegelförmige Rollbahn aufweisen, die dadurch über den Rollkörpern verschwenkbar wird. Dies erleichtert das Umsetzen des Druckelements in andere Systeme z.B. mittels eines Roboters. Grundsätzlich sind Bewegungen nicht nur in den Koordinatenachesen, sondern auch quer oder diagonal dazu möglich.

Gerade beim Einsatz in Verbindung mit Arbeitsrobotern oder Arbeitszentren, bei denen Schwenk- oder Drehbewegungen erfolgen sollen, ist entscheidend, daß die Vorrichtung eine kompakte Bauhöhe besit Insofern ist das Druckelement 16a in Fig. 1 einstückig mit einem Ringkolben 16 eines Betätigungszylinders Z. Das im Ausführungsbeispiel zylinderförmige Druckelement umgreift das zylinderförmige Übertragungselement 17 und ist auf der Innenseite eines beidseitig beaufschlagbaren Ringkolbens 16 des Betätigungszylinders Z angeordnet. Der Betätigungszylinder Z besitzt einen Innenflansch 18, der die beiden Zylinderräume 21, 22 voneinander trennt. Um das Druckelement zu bewegen, besitzt der Ringkolben 16 zwei Radialflansche 16c, die zumindest einseitig beaufschlagbar sind. Soll das Druckelement in Fig. 1 nach oben bewegt werden, so wird über die Leitung 23 Druckmedium, z.B. Luft in den Zylinderraum 22 eingeleitet. Für eine Bewegung nach unten wird über die Druckleitung 24 Druckmedium in den Zylinderraum 21 eingeleitet. Um die Wirkungsweise des Betätigungszylinders Z weiter zu erhöhen, besteht grundsätzlich auch die Möglichkeit, weitere Zylinderräume reihenweise hintereinander zu setzen und z.B. den in der Fig. 1 unteren Radialflansch 16c nochmals von unten mit Druck zu beaufschlagen.

### Bezugszeichenliste

- 10: erstes Bauteil
- 11: zweites Bauteil
- 12: Koppelgetriebe
- 13: Führungselement
- 14, 14': Rollkörperkäfig
- 14a: Aufnahme
- 15: Rollkörper
- 16: Ringkolben
- 16a,29,29': Druckelement
- 16b,29b: Rollbahn
- 16c: Radialflansch
- 17: Übertragungselement
- 17a: kegelförmige Bohrung
- 17b: Flanke
- 17c: gegenüberliegende Seite
- 18: Innenflansch
- 19, 20: Anschlag
- 21, 22: Zylinderraum
- 23, 24: Leitung
- 27: Betätigungselement
- 28: Kreislinie
- 29d: Fläche
- 30: Nut
- x,y: Verschiebe- oder Verdrehrichtung
- s-s: Spiegellinie
- H: Hochpunkt
- T: Tiefpunkt
- Z: Zylinder

## Patentansprüche

1. Vorrichtung zum Verschieben und/oder Verdrehen wenigstens eines Bauteils (10) relativ zu einem zweiten Bauteil (11) mittels eines Koppelgetriebes (12) mit
- einem Rollkörperkäfig (14, 14') für in Verschiebe- und/oder Verdrehrichtung (x) in Reihe angeordnete Rollkörper (15), die in Aufnahmen (14a) des Rollkörperkäfigs (14,14') beweglich sind,
- einem einem (11) der beiden Bauteile (10,11) zugeordneten Druckelement (16a,29), das mit wenigstens einer Rollbahn (16b,29b) die an der Rollbahn anliegenden Rollkörper (15) mehr oder weniger tief in die Aufnahmen (14a) des Rollkörperkäfigs (14,14') drückt,
- einem dem anderen (10) der beiden Bauteile (11,10) zugeordneten Übertragungselement (17) mit mehreren in Reihe angeordneten Eingriffsmöglichkeiten (17a), in die die vom Druckelement (16a) betätigten Rollkörper (15) so eintauchen, daß sie zumindest die Flanken (17b) der Eingriffsmöglichkeiten berühren, wobei der Abstand der Eingriffsmöglichkeiten zueinander zumindest in einem geringfügig anderen Teilerverhältnis steht als der Abstand der Aufnahmen (14a) des Rollkörperkäfigs (14, 14') zueinander,
dadurch gekennzeichnet, daß die Eingriffsmöglichkeiten zumindest teilweise kegel- oder kegelstumpfförmige Bohrungen (17a) sinu, an deren Flanken (17b) die Rollkörper das eine Bauteil in einer Fläche abstützen, die zu der Fläche parallel ist, in der die Bohrungen (17a) liegen.

2. Vorrichtung nach Anspruch 1, dadurch gekennzeichnet, daß neben dem Bereich mit den kegel- oder kegelstumpfförmigen Bohrungen (17a) ein Bereich mit Nuten (30) vorgesehen ist, die sich in Richtung oder quer zur Richtung der in Reihe angeordneten Bohrungen erstrecken und in die die Rollkörper zur Axialverschiebung überführbar sind.

3. Vorrichtung nach Anspruch 1 oder 2, dadurch gekennzeichnet, daß die Rollkörper (15) die Flanken (17b) der Eingriffsmöglichkeiten an wenigstens einer vom Druckelement (16a,29) hervorgerufenen An-und Abstiegsseite spielfrei berühren.

4. Vorrichtung nach einem der Ansprüche 1 bis 3, dadurch gekennzeichnet, daß die Rollbahn (16b) des Druckelements (16a) gegenüber der Verschiebe- oder Verdrehrichtung (x) einen Winkel aufweist, der kleiner ist als der Selbsthemmungswinkel des Werkstoffs von Rollkörper (15) und Druckelement (16a).

5. Vorrichtung nach einem der vorhergehenden Ansprüche, dadurch gekennzeichnet, daß beim Verdrehen der Bauteile (10,11) ineinander das Druckelement eine Kurvenscheibe (15') ist, deren wenigstens eine An- und Abstiegsseite in Verdrehrichtung zu- und abnimmt.

6. Vorrichtung nach einem der vorhergehenden Ansprüche, dadurch gekennzeichnet, daß das Übertragungselement (17) auf der den Eingriffsmöglichkeiten im rechten Winkel zur Verdreh- oder Verschiebeeinrichtung (x,y) gegenüberliegenden Seite (17c) über weitere Eingriffsmöglichkeiten für eine zweite Gruppe von Rollkörpern eines weiteren Getriebes aufweist.

7. Vorrichtung nach einem der vorhergehenden Ansprüche, dadurch gekennzeichnet, daß mehrere Vorrichtungen in Reihe hintereinander angeordnet sind, die gleichzeitig eines der Bauteile (10,11) über die Rollkörper (15) lagern.

8. Vorrichtung nach einem der vorhergehenden Ansprüche, dadurch gekennzeichnet, daß das Druckelement (16a) einstückig mit einem Ringkolben (16) eines Betätigungszylinders (Z) ist.

9. Vorrichtung nach Anspruch 8, dadurch gekennzeichnet, daß das zylinderförmige Druckelement (16a) das zylinderförmige Übertragungselement (17) umgreift und auf der Innenseite des beidseitig beaufschlagbaren Ringkolbens (16) des Betätigungszylinders (Z) angeordnet ist.

10. Vorrichtung nach Anspruch 9, dadurch gekennzeichnet, daß der Ringkolben zwei Radialflansche (16c) aufweist, die zumindest einseitig beaufschlagbar sind.

## Claims

1. Device for displacing and/or rotating at least one component (10) relative to a second component (11) through the intermediary of a coupled gear (12) having
- a rolling body cage (14, 14') for rolling bodies (15), which are disposed in rows in the direction of displacement and/or the direction of rotation (x) and which are displaceable in mountings (14a) of the rolling body cage (14, 14'),
- a pressure element (16a, 29) which is assigned to one (11) of the two components (10, 11) and which, having at least one track (16b, 29b), presses the rolling bodies (15) abutting the track more or less deeply into the mountings (14a) of the rolling body cage (14, 14'),
- a transmission element (17) assigned to the other (10) of the two components (11, 10), having a plurality of parts which can mesh (17a), which are disposed in rows and into which the rolling bodies (15), actuated by the pressure element (16a), plunge in such a manner that they contact at least the flanks (17b) of the parts which can mesh, the division ratio of the spacings between the parts that can mesh being at least slightly different to that of the spacings between the mountings (14a) of the rolling body cage (14, 14') relative to one another,
characterised in that the parts which can mesh are at least partially conical or frustoconical-shaped bores (17a), on the flanks (17b) of which the rolling bodies support the one component on one face, which is parallel to the face in which the bores (17a) are provided

2. Device according to claim 1, characterised in that next to the region with the conical- or frustoconical-shaped bores (17a) a region with grooves (30) is provided which extend in the direction of or transversely relative to the direction of the bores disposed in rows and into which the rolling bodies are transferable for axial displacement.

3. Device according to claims 1 or 2, characterised in that the rolling bodies (15) contact in a play-free manner the flanks (17b) of the parts which can mesh at least one ascending and descending side produced by the pressure element (16a, 29).

4. Device according to one of the claims 1 to 3, characterised in that the track (16b) of the pressure element (16a) has an angle relative to the direction of displacement or rotation (x) which is smaller than the self-locking angle of the material of rolling bodies (15) and pressure element (16a).

5. Device according to one of the preceding claims, characterised in that when the components (10, 11) are rotated into each other the pressure element is a cam plate (15'), at least one ascending and descending side of which increases and decreases in the direction of rotation.

6. Device according to one of the preceding claims, characterised in thatthe transmission element (17), on the side (17c) situated opposite the parts which can mesh, at right angles relative to the rotation or displacement device (x, y), has further parts which can mesh for a second group of rolling bodies of another gear unit.

7. Device according to one of the preceding claims, characterised in that a plurality of devices are disposed in rows one behind the other which at the same time support one of the components (10, 11) above the rolling bodies (15).

8. Device according to one of the preceding claims, characterised in that the pressure element (16a) is formed integrally with a rotary piston (16) of an operating cylinder (Z).

9. Device according to claim 8, characterised in that the cylindrical pressure element (16a) extends around the cylindrical transmission element (17) and is disposed on the inside of the rotary piston (16) of the operating cylinder (Z), which rotary piston can be acted upon on both sides.

10. Device according to claim 9, characterised in that the rotary piston has two radial flanges (16c) which can be acted upon at least on one side.

## Revendications

1. Dispositif pour la translation et/ou la rotation d'au moins un composant (10) par rapport à un deuxième composant (11), au moyen d'un mécanisme à bielle (12), comportant
- une cage à corps de roulement (14,14') pour des corps de roulement (15) disposés en rangée, dans le sens de translation et/ou le sens de rotation (x), qui sont déplaçables dans des logements (14a) de la cage à corps de roulement (14,14'),
- un élément de pression (16a,29) affecté à l'un (11) des deux composants (10,11), qui pressent, par au moins une voie de roulement (16b,29b), les corps de roulement (15) qui s'appliquent contre la voie de roulement, plus ou moins profondément dans les logements (14a) de la cage à corps de roulement (14,14'),
- un élément de transmission (17), affecté à l'autre (10) des deux composants (11,10), avec plusieurs possibilités d'engagement (17a), disposées en rangée, dans lesquelles pénètrent les corps de roulement (15), actionnés par l'élément de pression (16a), de manière à toucher au moins les flancs (17b) des possibilités d'engagement, l'écartement entre les possibilités d'engagement se trouvant au moins dans un rapport de division légèrement différent de celui de l'écartement des logements (14a) de la cage à corps de roulement (14,14'),
caractérisé en ce que les possibilités d'engagement sont au moins en partie des trous (17a) coniques ou tronconiques contre les flancs (17b) desquels les corps de roulement soutiennent un composant dans une surface qui est parallèle à la surface dans laquelle se situent les trous (17a).

2. Dispositif selon la revendication 1, caractérisé en ce qu'à côté de la zone avec les trous (17a) coniques ou tronconiques, est prévue une zone avec des rainures (30) qui s'étendent dans la direction ou transversalement à la direction des trous disposés en rangée et dans lesquelles les corps de roulement peuvent être transférés pour la translation axiale.

3. Dispositif selon la revendication 1 ou 2, caractérisé en ce que les corps de roulement (15) sont en contact sans jeu avec les flancs (17b) des possibilités d'engagement sur au moins un côté de montée et de descente par l'élément de pression (16a,29).

4. Dispositif selon l'une des revendications 1 à 3, caractérisé en ce que la voie de roulement (16b) de l'élément de pression (16a) présente, par rapport au sens de translation ou de rotation (x), un angle qui est inférieur à l'angle d'autoblocage de la matière des corps de roulement (15) et de l'élément de pression (16a).

5. Dispositif selon l'une des revendications précédentes, caractérisé en ce que lorsque les composants (10,11) tournent l'un dans l'autre, l'élément de pression est un disque à came (15') dont au moins un côté de montée et de descente augmente et diminue dans le sens de rotation.

6. Dispositif selon l'une des revendications précédentes, caractérisé en ce que l'élément de transmission (17) sur le côté (17c), opposé au possibilités d'engagement, à angle droit par rapport au sens de rotation ou de translation (x,y), présente d'autres possibilités d'engagement pour un deuxième groupe de corps de roulement d'un autre mécanisme.

7. Dispositif selon l'une des revendications précédentes, caractérisé en ce que plusieurs dispositifs sont disposés en rangée l'un derrière l'autre et supportent en même temps l'un des composants (10,11) par l'intermédiaire des corps de roulement (15).

8. Dispositif selon l'une des revendications précédentes, caractérisé en ce que l'élément de pression (16a) est d'un seul tenant avec un piston annulaire (16) d'un vérin d'actionnement (Z).

9. Dispositif selon la revendication 8, caractérisé en ce que l'élément de pression (16a) de forme cylindrique entoure l'élément de transmission (17) de forme cylindrique et est disposé sur le côté intérieur du piston annulaire (16) du vérin d'actionnement (Z), qui peut être sollicité des deux côtés.

10. Dispositif selon la revendication 9, caractérisé en ce que le piston annulaire présente deux brides radiales (16c) qui peuvent être sollicitées au moins d'un côté.
